# EUROPÄISCHE PATENTSCHRIFT

(11) **EP 0 716 792 B1**
(45) Veröffentlichungstag und Bekanntmachung des Hinweises auf die Patenterteilung: **02.05.1997**
(21) Anmeldenummer: 94926899.9
(22) Anmeldetag: 27.08.1994
(51) Int. Cl.: H04H 9/00, H04N 5/765, H04N 5/44

(54) **VERFAHREN UND EINRICHTUNG ZUM DETEKTIEREN UNERWÜNSCHTER VIDEOSZENEN**
PROCESS AND DEVICE FOR DETECTING UNDESIRABLE VIDEO SCENES
PROCEDE ET DISPOSITIF DE DETECTION DE SCENES VIDEO INDESIRABLES

(30) Priorität: 31.08.1993 DE 4329274
(43) Veröffentlichungstag der Anmeldung: 19.06.1996
(73) Patentinhaber: Interessengemeinschaft für Rundfunkschutzrechte GmbH Schutzrechtsverwertung & Co. KG., D-40210 Düsseldorf (DE)
(72) Erfinder: KÖRBER, Matthias, D-90579 Langenzenn (DE)
(74) Vertreter: Eichstädt, Alfred, Dipl.-Ing.
(86) Internationale Anmeldenummer: EP9402843
(87) Internationale Veröffentlichungsnummer: WO9506985

(56) Entgegenhaltungen:
- EP-A- 0 210 609
- EP-A- 0 248 533
- EP-A- 0 276 036
- WO-A-93/22875
- DE-C- 4 106 246
- GB-A- 2 040 129

## Beschreibung

Die Erfindung betrifft ein Verfahren und eine Einrichtung zum automatischen Detektieren unerwünschter Videoszenen aus einer laufenden Fernsehsendung, welche durch Auswertung von Bildern, insbesondere Anfangsbildern, der unerwünschten Videoszenen erreicht wird.

Von vielen Sendestationen werden die laufenden Sendungen unterbrochen und Werbebeitrage eingeblendet. Diese Werbebeiträge stellen für die meisten Zuschauer eine störende Unterbrechung dar. Es sind bereits Vorschläge bekannt, um die störenden Werbebeitrage zu unterdrücken. Einer dieser Vorschläge ist, den Ton während des Werbebeitrags abzustellen. Die Patentschrift US-A-3 870 956 zeigt eine Schaltung, die den Ton des Werbebeitrags für eine vorbestimmte Zeit unterdrückt. Dazu muß eine Bedienperson (der Zuschauer) die entsprechende Taste eines Fernbedienungsgebers zu Beginn der Werbung betätigen. Wird allerdings nur der Ton unterdrückt, so muß der Zuschauer die Werbebeitrage noch immer betrachten.

Aus dem Dokument EP-A-0 384 388 ist eine Einrichtung mit einem Modus bekannt, der es erlaubt, durch die Betätigung der Sendestationsauswahltasten oder der Pausentaste die Betrachtung des Werbebeitrags zu umgehen. Während das Programm einer anderen Sendestation gesehen werden kann, wird auf dem Bildschirm des Fernsehempfangers eine Nachricht eingeblendet, daß eine voreingestellte Zeitspanne abgelaufen ist, so daß der Zuschauer zur ursprünglichen Sendestation zurückkehren kann.

Nachteilig bei den oben genannten Vorschlägen ist, daß der Zuschauer immmer zu Beginn der Werbung eine Taste drücken muß, um den Werbebeitrag zu unterdrücken. Weiterhin ist von Nachteil, daß durch den Ablauf einer fest voreingestellten Zeit das Ende des jeweiligen Werbebeitrags nicht genau zu bestimmen ist.

Diese Nachteile werden bei der in der deutschen Patentschrift DE-C-41 06 246 beschriebenen Einrichtung dadurch vermieden, daß Anfang und Ende eines Werbebeitrags, nach einmaliger Kennzeichnung und Abspeicherung der den Anfang und das Ende von Werbeblöcken charakterisierenden Bilder durch eine Bedienperson, von der Einrichtung automatisch erkannt werden. Somit ist die automatische Unterdrückung von Werbebeitragen möglich, ohne erwünschte Programminformation zu verlieren.

Nachdem die Sendeanstalten vielfach dazu übergegangen sind, nur noch den Anfang eines Werbeblocks mit einem besonderen Bild zu kennzeichnen, ist es mittels der bekannten Einrichtung nicht mehr möglich, den erneuten Beginn der durch den Werbeblock unterbrochenen Sendung zu erkennen. Deshalb wird nach Beendigung des Werbeblocks die unterbrochene Sendung nicht automatisch wieder dargestellt.

Aus den vorhergehenden Ausführungen ergibt sich, daß es für die Ausblendung beispielsweise einer als unerwünschter Sendebeitrag empfangenen Werbesendung unerläßlich ist, auch dann eine einwandfreie Identifikation eines solchen Sendebeitrags durchführen zu können, wenn dieser durch Kennsignale senderseitig nicht markiert ist.

Die einwandfreie Identifikation und deren zeitliche Erfassung von sog. unerwünschten Videoszenen ist aber auch zur statistischen Erhebung und aus kommerziellen Gründen notwendig. Wenn ein Werbesendungsauftrag erteilt ist, so kann beispielsweise durch Identifikation an einem Empfangsort nachgewiesen werden, daß dieser Werbebeitrag in der vollen Länge auch abgestrahlt worden ist. Zur Erfassung solcher Bildsignale ist aus der DE 43 09 957 C1 ein Verfahren zum Wiedererkennen von unikaten Bildsignalen, insbesondere von unikaten Bildfolgen, bekannt, nach dem Luminanzwerte vorbestimmter Pixel und vorzugsweise vorbestimmter Gruppen von Pixeln (Cluster) abgetastet werden. In einem weiteren Verfahrensschritt wird ein Differenzsignal zwischen den Luminanzwerten der vorbestimmten Cluster gebildet und aus diesen eine Signumfunktion abgeleitet. Pro Vollbild entsteht damit ein binarer Merkmalsvektor, dessen Länge der Anzahl der pro Vollbild abgetasteten Cluster entspricht. Für eine vorbestimmte Anzahl aufeinanderfolgender Vollbilder (z.B. 51) wird dann ein Bildsequenz-Merkmalsvektor gebildet, der nach jedem Vollbild aktualisiert wird. Nach jedem Vollbild wird der aktualisierte Merkmalsvektor mit einer Vielzahl von in gleicher Weise ermittelten Merkmalsvektoren, die abgespeicherte, wiederzuerkennende Bildfolgen identifizieren, korreliert. Bei einem vorbestimmten Korrelationswert wird ein Signal "Bildfolge wiedererkannt" erzeugt. Auf diese Weise ist es möglich, eine Werbesendung, die im Sinne der vorliegenden Anmeldung als eine unerwünschte Videoszene angesehen wird, aber auch als gewünschte gelten kann, zu erfassen. Die Signale geben dabei bei entsprechender Auswahl der Cluster und zeitlicher Bestimmung während des Empfangs einer Videoszene zu Anfang und zum Ende eine genaue Auskunft über die Länge der Szene, die empfangen worden ist, so daß sowohl eine Bildszenenzuordnung (einzelner Werbespot) als auch eine Erfassung der insgesamt erfolgten Übertragung der unerwünschten Videoszene möglich ist. Dieses bekannte Verfahren ist aber nicht darauf ausgerichtet, auch Bilder vor der unerwünschten Szene und nach der unerwünschten Szene mit auswerten zu können, um beispielsweise erfassen zu können, in welchem Szenenabschnitt einer fortlaufenden Fernsehsendung, beispielsweise eines Films, diese Videoszenen eingebracht sind oder gar dazu benutzt werden zu können, um die unerwünschte Bildszene auszublenden.

Aufgabe der Erfindung ist es daher, ein Verfahren und eine Einrichtung der eingangs beschriebenen Art dahingehend zu verbessern, daß ein sicheres Auffinden des Anfangs und des Endes eines unerwünschten Sendebeitrags, beispielsweise eines Werbebeitrags, ohne die jeweilige Mitwirkung einer Bedienperson möglich ist.

Diese Aufgabe wird erfindungsgemäß durch die Merkmale der Patentansprüche 1, 2, 17 oder 23 gelöst.

Der Vorteil der Erfindung liegt darin, daß nur jeweils der Anfang oder die Bildszenen, die in die Auswertung mit einbezogen werden sollen, bei der Betrachtung einer unerwünschten Videoszene einmalig markiert werden müssen, während im Wiederholungsfall der Einspielung solcher unerwünschten Bildszenen, z.B. im Abendprogramm eines Senders, diese keiner wiederholten Eingabe bedürfen, da das System automatisch diese unerwünschten Videoszenen anhand der Erstvorgaben und deren Auswertung erkennt. Das Verfahren ist darüber hinaus auch einsetzbar, wenn die unerwünschten Bildszenen einer Videoszene sich in den Folgeübertragungen eines Abendprogramms nicht in gleicher Reihenfolge oder in anderer Bildszenenzusammensetzung, z.B. andere Werbebeiträge, wiederholen. Für diesen Fall ist vorgesehen, daß die Szenenbeiträge mehrerer unerwünschter Videoszenen abgespeichert und ausgewertet werden, wobei davon auszugehen ist, daß beispielsweise innerhalb einer Werbesendung von ein und demselben Sender die Werbespots zumindest innerhalb einer Tagessendung oder einer Wochensendung wiederholt übertragen werden. Durch die Vergleichsprüfung mit abgespeicherten möglichen Szenenbildern oder Clustern solcher Bilder werden auch unterschiedliche Reihenfolgen der Szenen berücksichtigt. Somit ist es in jedem Fall nach der Erfindung möglich, einwandfrei den Beginn und das Ende einer unerwünschten Szene feststellen zu können, auch dann, wenn die Endszene (letzter Werbespot) einer unerwünschten Videoszene nicht bekannt ist. Ein weiterer Vorteil liegt also auch darin, daß nur jeweils ein den Anfang von Werbebeiträgen charakterisierendes Bild vom Benutzer abgespeichert werden muß, wobei das das Ende von Werbebeiträgen charakterisierende Bild automatisch aus dem laufenden Sendebeitrag gewonnen wird. Somit ist das sichere Erkennen des Endes eines Werbebeitrags gewährleistet.

Das erfindungsgemäße Verfahren weist in der Weiterbildung gemäß Patentanspruch 10 den Vorteil auf, daß durch die zusätzliche Überprüfung, z.B. auf Vorhandensein oder Fehlen eines Senderkennzeichens, das Auffinden von Anfang und Ende von unerwünschten Videoszenen verbessert wird.

Die Ausführungsform der Einrichtung gemäß Patentanspruch 18 weist den Vorteil auf, daß durch die Datenreduktion der Speicherbedarf des das Anfangs- und das jeweilige Endbild der unerwünschten Videoszenen aufnehmenden Speichers verringert wird.

Die Verwendung des Speichers nach Patentanspruch 19 ermöglicht es, die Reaktionszeiten von Benutzer bzw. Steuereinrichtung bei der Auswahl der Anfangs- und Endbilder der unerwünschten Videoszenen auszugleichen.

Gemäß der Ausführungsform nach Patentanspruch 20 ist eine zweite Signalverarbeitungseinrichtung und bei Bedarf ein zweiter Analog-Digital-Wandler vorgesehen. Dadurch wird es Zuschauern ermöglicht, während der Sendung z.B. eines Werbebeitrags (durch die von ihm an der ersten Signalverarbeitungseinrichtung ausgewählte Sendestation) Programmbeiträge anderer Sendestationen zu betrachten. Weiterhin ist am Ende des Werbebeitrags, ohne zeitliche Überschneidung, die Fortsetzung des Programmbeitrags der ursprünglich eingestellten Sendestation möglich.

Die in der Ausführungsform gemäß Patentanspruch 21 beschriebenen zusätzlichen Tasten des Fernbedienungsgebers haben den Vorteil, daß sie dem Benutzer der Einrichtung eine einfache Bedienung ermöglichen.

In der Ausführungsform gemäß Patentanspruch 22 wird durch das Bereitstellen eines Pausenschaltimpulses für ein ggf. angeschlossenes Videoaufzeichnungsgerat bei erkanntem Beginn einer unerwünschten Videoszene, z.B. bei Werbungsbeginn, die Videoaufzeichnung unterbrochen und erst wieder fortgesetzt, wenn der Werbebeitrag beendet ist. Dadurch ist die Videoaufzeichnung von Werbung vermeidbar und der aufgezeichnete Programmbeitrag kann ohne störende Unterbrechungen und Wiederholungen wiedergegeben werden.

Weitere Einrichtungen zur Durchführung des Verfahrens sind in den Ansprüchen 23 bis 26 im einzelnen detailiert angegeben.

Im Falle der Verwendung eines Verfahrens und einer Einrichtung zur Durchführung des Verfahrens, bei dem die Mittelwerte des Luminanzsignals eines Clusters verwendet werden, kann eine Auswertung nach der in der DE 43 09 957 C1 beschriebenen Art und Weise erfolgen, und zwar nicht nur für die Bildszenen der unerwünschten Szenen, sondern auch für die vor der unerwünschten Szene liegenden Bilder und für die nach der unerwünschten Szene liegenden Bilder.

Die Erfindung wird im folgenden anhand einer Figur ergänzend am Beispiel der Auswertung für eine Ausblendung einer unerwünschten Videoszene beschrieben und erläutert.

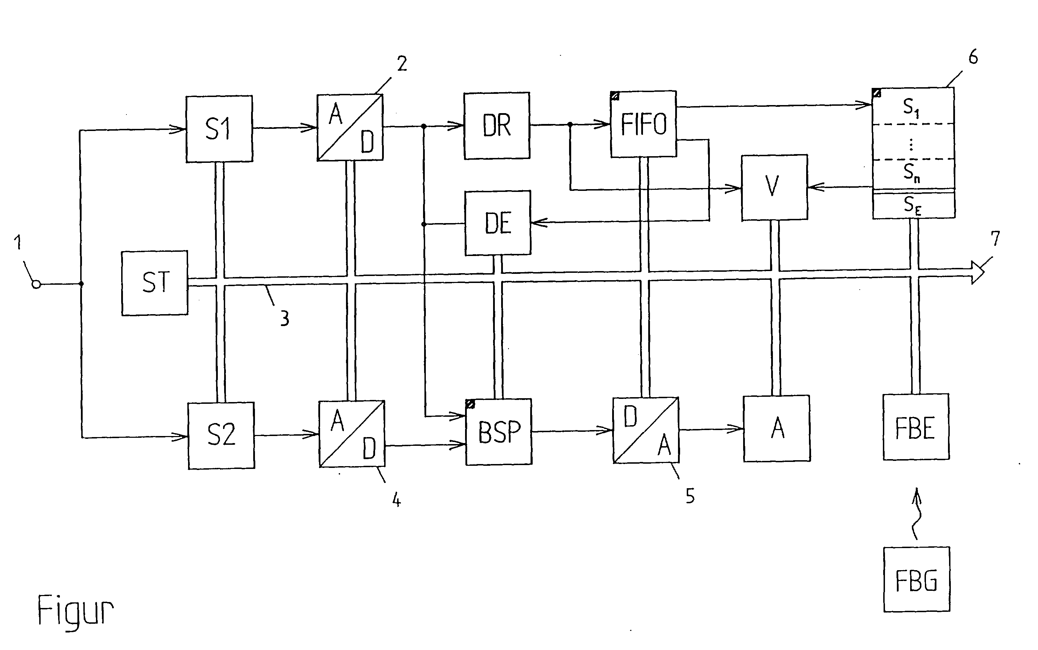

Die Figur zeigt das Blockschaltbild einer Ausführungsform der erfindungsgemäßen Einrichtung als Bestandteil eines Fernsehempfangsgerates.

Die z.B. über eine Antenne empfangenen und zu verarbeitenden Fernsehsignale werden in 1 eingespeist, und am Ausgang der Signalverarbeitungseinrichtung S1 steht das decodierte Farbfernsehsignal der über den Fernbedienungsgeber FBG ausgewählten Sendestation zur weiteren Verarbeitung an. Wird über den Fernbedienungsgeber FBG eine Sendestation ausgewählt, so sendet der Fernbedienungsgeber FBG die nötigen Informationen an den Fernbedienungsempfänger FBE, der über den Datenbus 3 (z.B. I²C-Bus, zur Steuerung der Komponenten der gesamten Einrichtung) mit der Steuereinrichtung ST verbunden ist, welch im wesentlichen aus einem Mikroprozessor und einem das Steuerprogramm enthaltenden Speicher besteht. Die Steuereinrichtung ST leitet dann den nötigen Abstimmvorgang des in der Signalverarbeitungseinrichtung S1 enthaltenen Tuners auf die Frequenz der ausgewählten Sendestation ein. Das analoge Farbfernsehsignal wird vom Analog-Digital-Wandler 2 in ein digitales Signal umgewandelt, in den Bildspeicher BSP eingeschrieben, von dort ausgelesen, über einen Digital-Analog-Wandler 5 rückgewandelt und mittels Anzeigeeinrichtung A dargestellt.

Vorteilhafte Ausbildungen des erfindungsgemäßen Verfahrens gemäß der Ansprüche 1 und 2 sind in den Unteransprüchen 3 bis 16 angegeben, wobei die Aufnahme zusätzlicher Prüfkriterien, wie sie insbesondere in den Ansprüchen 9, 10, 12, 13, 14, 15 und 16 angegeben sind, eine zusätzliche Sicherheit bei der Auswertung gewährleisten, um möglichst Fehlentscheidungen bei der automatischen Abprüfung zu vermeiden, so daß auch bei Abwesenheit, beispielsweise bei Empfang einer übertragenen Sendung, diese ohne Zwischenaufzeichnung unerwünschter Videoszenen von einem Videorecorder aufgezeichnet werden können, wobei die Erkennungssignale zur Steuerung des Videorecorders mit herangezogen werden, so daß die Aufzeichnung während der Zeit der Ausblendung der unerwünschten Szene unterbrochen wird und sofort wieder fortgesetzt wird, wenn bekannt wird, daß es sich um eine fortlaufende aufzuzeichnende Sendung handelt, beispielsweise um die Fortsetzung der Videoszenen eines Spielfilms.

Das erfindungsgemäße Verfahren ist aber nicht nur für die Ausblendung oder Unterbrechung und Fortführung von Aufzeichnungen fortlaufender Sendungen unter Ausschluß der unerwünschten Szenen einsetzbar, sondern insbesondere auch zur genauen Erfassung solcher unerwünschter Szenen, wie sie, wie eingangs schon ausgeführt, für statistische Zwecke durchgeführt werden muß.

Die Einrichtungen, die zur Durchführung der Verfahren vorgesehen sind, sind in den Ansprüchen 18 bis 26 angegeben.

Um die Darstellung von Werbung zu vermeiden, kann über den Fernbedienungsgeber FBG eine Betriebsart aktiviert werden, bei der Werbebeiträge nicht durch die Anzeigeeinrichtung A sichtbar gemacht werden. Anstelle des Werbebeitrags der ausgewählten Sendestation wird das Fernsehsignal einer anderen vorausgewählten Sendestation, das über eine zweite Signalverarbeitungseinrichtung S2 und einen zweiten Analog-Digital-Wandler 4 am zweiten Eingang des Bildspeichers BSP anliegt, in diesen eingeschrieben und über den Digital-Analog-Wandler 5 und die Anzeigeeinrichtung A für die Dauer des Werbebeitrags dargestellt.

Während der Darstellung des Fernsehsignals der zweiten Signalverarbeitungseinrichtung S2 ist über den Fernbedienungsgeber FBG die freie Auswahl beliebiger Sendestationen möglich, die durch die Steuereinrichtung ST im Tuner der Signalverarbeitungseinrichtung S2 abgestimmt werden. Unter Verwendung des Bildspeichers BSP ist es auch möglich, mehrere Programme gleichzeitig zu betrachten, die als Teilbilder auf dem Bildschirm der Anzeigeeinrichtung A dargestellt werden, um einen Überblick des aktuellen Programmangebots zu erhalten.

Nach Beendigung des Werbebeitrags der ursprünglich ausgewählten Sendestation wird der Programmbeitrag dieser Sendestation, vom Analog-Digital-Wandler 2 kommend, wieder in den Bildspeicher BSP eingeschrieben und auf der Anzeigeeinrichtung A dargestellt. Die Umschaltung der beiden am Bildspeicher BSP anliegenden digitalen Fernsehsignale erfolgt durch die Steuereinrichtung ST, sobald der Anfang oder das Ende eines Werbebeitrags erkannt wurde. Außerdem erzeugt die Steuereinrichtung ST einen Pausenschaltimpuls, der über den Datenbus 3 am Anschluß 7 zur Verfügung gestellt wird, um die Aufzeichnung eines Programmbeitrags mittels Videoaufzeichnungsgerat für die Dauer eines eingeblendeten Werbebeitrags unterbrechen zu können.

Die Erkennung des Anfangs bzw. Endes eines Werbebeitrags ist möglich, da viele Sendeanstalten den Anfang von Werbebeiträgen durch spezielle Bilder und Tonfolgen kennzeichnen. Diese charakteristischen Bilder werden vom Zuschauer markiert und im Speicher 6 abgelegt. Um die Größe des Speichers 6 zu begrenzen, werden die Bilddaten in der Datenreduktionseinrichtung DR bekannten zweidimensionalen Datenreduktionsverfahren unterworfen, und es wird jeweils nur die Luminanzinformation des ersten Halbbildes ausgewertet. Speicher 6 ist so aufgebaut, daß er für eine Sendestation jeweils das Anfangsbild verschiedener Werbebeitrage aufnehmen kann.

Die Kennzeichnung des Anfangsbildes für eine ausgewählte Sendestation erfolgt durch eine Bedienperson, indem der Zuschauer bei Werbungsbeginn die Taste "Werbungsbeginn" des Fernbedienungsgebers FBG betätigt. Da die Betätigung der Taste immer erst nach einer gewissen Reaktionszeit erfolgt, ist ein Speicher FIFO vorgesehen, der die Bilder z.B. einer Sekunde speichert und als FIFO-Speicher realisiert werden kann. Die dort gespeicherten, datenreduzierten Bilder werden in der Expansionseinrichtung DE rückgewandelt und über den Bildspeicher BSP und den Digital-Analog-Wandler 5 auf der Anzeigeeinrichtung A dargestellt. Die Bilder werden mit ausreichendem zeitlichen Abstand (ca. 1 sec) auf der Anzeigeeinrichtung A dargestellt, so daß die Bedienperson reagieren kann und das am besten geeignete Anfangsbild auswählen kann. Bei nochmaliger Betätigung der Taste "Werbungsbeginn" werden die reduzierten Daten des ausgewählten Anfangsbildes im Speicher 6 für die ausgewählte Sendestation im jeweiligen Speicherplatz S₁ bis Sₙ gespeichert.

Für den Fall, daß über den Fernbedienungsgeber FBG die Betriebsart eingestellt ist, welche die Darstellung von Werbebeiträgen verhindert, wird aus Speicher 6 das oder die charakteristischen Anfangsbilder des Werbebeitrags der ausgewählten und in der Signalverarbeitungseinrichtung S1 eingestellten Sendestation an den Vergleicher V gegeben, welcher es mit den laufenden Bildern dieser Sendestation vergleicht. Bei Übereinstimmung mit einem Anfangsbild wird, wie oben beschrieben, der beginnende Werbebeitrag unterdrückt und die mittels Signalverarbeitungseinrichtung S2 empfangene Sendestation dargestellt. Gleichzeitig wird unter Steuerung der Einheit ST ein im Speicher FIFO zwischengespeichertes Bild, welches zeitlich vor dem den Anfang des Werbebeitrags charakterisierenden Bild von der Sendestation ausgestrahlt wurde, in den Speicherplatz S_{E} geschrieben. Dazu muß der Speicher FIFO mindestens so groß sein, daß die von der Sendestation während der zur Überprüfung eines Bildes durch die Einrichtung bentötigten Zeitspanne gesendeten Bilder gespeichert werden können. Dadurch wird gewährleistet, daß ein Bild in den Speicherplatz S_{E} geschrieben wird, das Bestandteil des Programmbeitrags ist. Da nach Beendigung von Werbebeiträgen üblicherweise eine gewisse Zeitspanne des zuvor gesonderten Programmbeitrags wiederholt wird, ist das Ende des Werbebeitrags bei erneutem Auftreten des im Speicherplatz S_{E} gespeicherten Bildes sicher zu erkennen und die Rückkehr zur ursprünglichen, jetzt werbungsfreien Sendeanstalt kann erfolgen. Anschließend wiederholt sich der Vergleichsvorgang, beginnend mit dem Anfangsbild und anschließender Festlegung des Endbildes für den jeweils ermittelten Werbebeitrag.

Die Vermeidung der Darstellung der von der Sendeanstalt wiederholten gewissen Zeitspanne des Programmbeitrags ist insbesondere bei der Ansteuerung eines Videoaufzeichnungsgerats über Anschluß 7 vorteilhaft.

Der Betrieb der Einrichtung ist auch ohne den Bildspeicher BSP möglich, wenn stattdessen ein von der Steuereinrichtung ST betätigter Umschalter verwendet wird, welcher die digitalen Fernsehsignale beim Auftreten von Werbung umschaltet. Die gleichzeitige Darstellung der Fernsehbilder mehrerer Sendestationen mit der Anzeigeeinrichtung A ist dann allerdings nicht mehr möglich.

Zur Verbesserung der Funktionsweise der oben beschriebenen Einrichtung kann es außerdem vorgesehen sein, das Vorhandensein oder Fehlen von Senderkennzeichen auszuwerten. Die Senderkennzeichen oder Senderlogos werden von den Sendeanstalten in die laufenden Programmbeiträge eingeblendet, beispielsweise in die obere linke Ecke des Bildes. Dahingegen enthalten Werbebeiträge üblicherweise keine derartigen Senderkennzeichen.

Das Vorhandensein eines Senderkennzeichens kann beispielsweise festgestellt werden, indem die Veränderungen des Bildinhalts der fortlaufenden Bilder überprüft werden. Ergibt sich dabei, daß innerhalb eines bestimmten Bildbereichs über einen längeren Zeitraum keine Änderungen auftreten, handelt es sich mit großer Wahrscheinlichkeit um ein an dieser Stelle eingeblendetes Senderkennzeichen.

Eine andere Möglichkeit ist es, daß der Benutzer beispielsweise mittels einer Cursor-Steuerung den Bildbereich kennzeichnet, in welchem sich das Senderkennzeichen befindet. Das so festgelegte Senderkennzeichen kann im Speicher 6 in den jeweiligen Speicherplätzen S₁ bis Sₙ zusammen mit den Anfangsbildern abgelegt werden, wodurch es für spätere Überprüfungen zur Verfügung steht.

Durch die Kombination der Überwachung der laufenden Sendungen sowohl auf Anfangs- und Endbild als auch auf Vorhandensein oder Fehlen der Senderkennzeichen kann das nahezu fehlerfreie Funktionieren der Ausblendung von Werbebeiträgen erreicht werden.

Eine weitere Möglichkeit zur Erkennung eines Werbebeitrags stellt, wie oben angedeutet, die Auswertung des Tonsignals dar. Der Aufbau der Einrichtung bleibt im wesentlichen mit dem oben beschriebenen gleich, es müssen jedoch dem Tonsignal entsprechende Verarbeitungseinrichtungen, die für sich bekannt sind, angewendet werden.

## Patentansprüche

1. Verfahren zum Detektieren unerwünschter Videoszenen aus einer laufenden Fernsehsendung, mit folgenden Verfahrensschritten:
a) Abspeichern mindestens eines Bildes der unerwünschten Videoszene, welches den Anfang der unerwünschten Videoszene charakterisiert,
b) ständiges Zwischenspeichern der Bilder der laufenden Fernsehsendung,
c) Überprüfen der Bilder der laufenden Fernsehsendung auf Übereinstimmung oder Korrelation mit dem nach Verfahrensschritt a) abgespeicherten Bild,
d) Generieren eines ersten Erkennungssignals bei Feststellung der Übereinstimmung und/oder bei Feststellung korrelierender Merkmale nach Verfahrensschritt c),
e) Abspeichern eines nach Verfahrensschritt b) zwischengespeicherten Bildes der laufenden Fernsehsendung, welches zeitlich vor dem Auftreten der unerwünschten Videoszene liegt,
f) Überprüfen der Bilder der unerwünschten Videoszene und der dieser folgenden Szene auf Übereinstimmung oder Korrelation mit dem nach Verfahrensschritt e) abgespeicherten Bild,
g) Generieren eines zweiten Erkennungssignals bei Feststellung der Übereinstimmung und/oder bei Feststellung korrelierender Merkmale nach Verfahrensschritt f).

2. Verfahren zum Detektieren unerwünschter Videoszenen aus einer laufenden Fernsehsendung mit folgenden Verfahrensschritten:
a) Abspeichern einer bestimmten Anzahl definierter vorbestimmter Gruppen von Pixeln (Cluster) aus einem Bild mindestens einer Bildszene der unerwünschten Videoszene, welches mindestens den Anfang der unerwünschten Videoszene charakterisiert,
b) ständiges Zwischenspeichern von definierten bildlich kongruenten Clustern der Bilder der laufenden Fernsehsendung,
c) Überprüfen der Cluster der Bilder der laufenden Fernsehsendung auf Übereinstimmung oder Korrelation mit den nach Verfahrensschritt a) abgespeicherten Clustern,
d) Generieren eines ersten Erkennungssignals bei der Feststellung der Übereinstimmung und/oder Feststellung korrelierender Merkmale der Cluster nach Verfahrensschritt c),
e) Abspeichern der nach Verfahrensschritt b) zwischengespeicherten Cluster eines Bildes der laufenden Fernsehsendung, welches zeitlich vor dem Auftreten der unerwünschten Videoszene liegt,
f) Überprüfen der Cluster der ausgewählten Bilder der unerwünschten Videoszene und der dieser folgenden Szene auf Übereinstimmung und/oder Feststellung korrelierender Merkmale mit den nach Verfahrensschritt e) abgespeicherten Clustern,
g) Generieren eines zweiten Erkennungssignals bei Feststellung der Übereinstimmung und/oder Feststellung korrelierender Merkmale nach Verfahrensschritt f).

3. Verfahren nach Anspruch 2, **dadurch gekennzeichnet**, daß die Cluster mehrerer ausgewählter Bilder der unerwünschten Videoszene definiert und abgespeichert werden, und daß diese mit den örtlich übereinstimmend festgelegten Clustern der fortlaufend zwischengespeicherten Bilder der laufenden Fernsehsendung verglichen werden.

4. Verfahren nach Anspruch 2 oder 3, **dadurch gekennzeichnet**, daß die Luminanzwerte der Pixel der vorbestimmten Cluster abgespeichert und miteinander verglichen werden und aus den Differenzwerten eine Signumfunktion zur Generierung des jeweiligen Erkennungssignals gebildet wird.

5. Verfahren nach einem der vorhergehenden Ansprüche, **dadurch gekennzeichnet**, daß die ersten und/oder zweiten Erkennungssignale zur Bestimmung der Länge der einzelnen unerwünschten Videoszene und/oder zur Bestimmung der Gesamtlänge der gesendeten Videoszenen innerhalb einer bestimmten Sendedauer oder zur Überprüfung des Inhalts einer Videoszene ausgewertet werden.

6. Verfahren nach einem der Ansprüche 1 bis 4, **dadurch gekennzeichnet**, daß das erste Erkennungssignal zur Ausblendung der unerwünschten Szene verwendet wird, und daß das zweite Erkennungssignal zur Einblendung der laufenden Fernsehsendung verwendet wird.

7. Verfahren nach einem der vorhergehenden Ansprüche, **dadurch gekennzeichnet**, daß zur Erkennung des Anfangs und/oder des Endes der unerwünschten Videoszene zusätzlich eine Überprüfung auf Vorhandensein oder Fehlen eines Senderkennzeichens durchgeführt wird.

8. Verfahren nach einem der vorhergehenden Ansprüche, **dadurch gekennzeichnet**, daß zur automatischen Bestimmung auszuwählender abzuspeichernder Bilder oder Cluster aus den Bildern der unerwünschten Videoszene übertragene, die unerwünschten Szenen zu Beginn und/oder zum Ende charakterisierende Kennsignale ausgewertet werden oder zur manuellen Eingabe durch Beobachtung der Bilder und Eingabe eines Speicherbefehls über eine Fernbedienung oder Ortsbedienung des nach dem Verfahren arbeitenden Gerätes die Auswahl erfolgt.

9. Verfahren nach Anspruch 1, **dadurch gekennzeichnet**, daß die Bilder der unerwünschten Szene und der darauffolgenden Bilder auf korrelierende Bestandteile mit dem abgespeicherten Bild überprüft werden, und daß bei Feststellung von Korrelation das zweite Erkennungssignal generiert wird.

10. Verfahren nach einem der vorhergehenden Ansprüche, **dadurch gekennzeichnet**, daß als weiteres oder alleiniges Prüfkriterium ein mit der laufenden Fernsehsendung übertragenes besonderes Senderkurzzeichen oder Senderpiktogramm in den Bildern der unerwünschten Videoszene und der darauffolgenden Bilder auf Vorhandensein oder Fehlen als Kriterium einer unerwünschten Videoszene ausgewertet wird.

11. Verfahren nach Anspruch 10, **dadurch gekennzeichnet**, daß die Bestätigung als Prüfkriterium durch Eingabe eines Befehls auf den Fernbedienungsgeber durch den Zuschauer bei Empfang einer unerwünschten Videoszene erfolgt, wenn diese keine Senderkennung in Form von Kurzbezeichnungen oder Piktogrammen aufweist.

12. Verfahren nach Anspruch 1 bis 8, **dadurch gekennzeichnet**, daß mehrere Bilder oder Cluster der Bilder vor der unerwünschten Videoszene abgespeichert werden und die Bilder der unerwünschten Szene und der dieser folgenden laufenden Fernsehsendung mit den abgespeicherten, auf Übereinstimmung, Korrelation, Senderkurzzeichen oder Senderpiktogramme überprüft werden.

13. Verfahren nach einem der Ansprüche 1 bis 12, **dadurch gekennzeichnet**, daß der dem abgespeicherten Bild oder abgespeicherten Bildern oder Clustern zugeordnete Begleitton mit abgespeichert und nach phonetischen Charakteristika überprüft wird, und daß diese phonetischen Charakteristika als zusätzliches Vergleichskriterium mit den ermittelten Charakteristika des Begleittons der laufenden Fernsehsendung verglichen werden und bei Übereinstimmung der phonetischen Charakteristika das zweite Erkennungssignal generiert wird.

14. Verfahren nach einem der Ansprüche 1 bis 13, **dadurch gekennzeichnet**, daß bei Vorhandensein der die unerwünschte Szene zum Anfang oder zum Ende begleitenden Hörzeichen diese mittels einer Erkennungsschaltung detektiert und als zusätzliches Prüfkriterium ausgewertet werden.

15. Verfahren nach einem der Ansprüche 1 bis 14, **dadurch gekennzeichnet**, daß die Zeitdauer der unerwünschten Videoszenen registriert wird und diese währenddessen oder - fortlaufend addiert - während eines übergreifenden vorbestimmten Zeitabschnittes, z.B. 90 min, mit einer Sollvorgabezeit der maximalen Einblenddauer für den vorliegenden oder den übergreifenden Zeitabschnitt verglichen wird, und daß bei Überschreitung der maximalen Sollsendezeit der unerwünschten Szenen innerhalb des Zeitabschnittes dies als weiteres Auswertekriterium für das Vorhandensein oder das Ende unerwünschter Videoszenen herangezogen wird.

16. Verfahren nach einem der vorhergehenden Ansprüche, **dadurch gekennzeichnet**, daß dieses auf eine bestimmte Anzahl ausgewählter Übertragungskanäle aus einer Vielzahl, in denen bestimmte Fernsehsendungen übertragen werden, beschränkt ist, z.B. auf vier Kanäle.

17. Einrichtung zum Ausblenden unerwünschter Videoszenen aus einer laufenden Fernsehsendung, welche mit einem Fernsehgerät oder einem Videorecorder empfangen und dargestellt oder aufgezeichnet wird,
bestehend aus
einer Signalverarbeitungseinrichtung (S1), zum Empfangen und Decodieren von analogen Fernsehsignalen,
einem Analog-Digital-Wandler (2), welcher die decodierten analogen Fernsehsignale in digitale Form umwandelt,
einem Bildspeicher (BSP), in den das digitale Fernsehsignal eingeschrieben und ausgelesen wird,
einer Fern- oder Ortsbedienungseinrichtung (ST), welche über einen Datenbus (3) die Einrichtung steuert,
einem Speicher (6), in den von einer Bedienperson ausgewählte, den Anfang unerwünschter Videoszenen charakterisierende Fernsehbilder oder örtlich und/oder anzahlmäßig definierte Bildteile eingeschrieben werden, wobei der Speicher (6) so strukturiert ist, daß der jeweils eingestellten Stationsnummer das ausgewählte Anfangsbild zugeordnet wird (S₁, ... ,Sₙ),
einem Vergleicher (V), der die laufenden Fensehbilder der eingestellten Sendestation mit dem dieser Sendestation im Speicher (6) zugeordneten Anfangsbild vergleicht und bei Übereinstimmung eine Meldung über den Datenbus (3) an die Steuereinrichtung (ST) sendet, woraufhin die Steuereinrichtung (ST) die Darstellung und/oder die Aufzeichnung der erkannten unerwünschten Videoszene verhindert,
**dadurch gekennzeichnet**,
daß ein Speicher (FIFO) vorgesehen ist, in dem die Fernsehbilder oder Bildteile ständig zwischengespeichert werden, daß nach der Erkennung des Anfangs einer unerwünschten Videoszene durch die Steuereinheit (ST) ein im Speicher (FIFO) zwischengespeichertes Fernsehbild, welches zeitlich vor dem Anfang der unerwünschten Videoszene liegt, in einem im Speicher (6) vorgesehenen Speicherplatz (S_{E}) abgespeichert wird, und daß der Vergleicher (V) das Ende der unerwünschten Videoszene durch Vergleich der laufenden Bilder oder Bildteile derselben mit dem im Speicherplatz (S_{E}) abgespeicherten Fernsehbild oder Bildteilen ermittelt und eine Meldung an die Steuereinrichtung (ST) erzeugt, die aufgrund dieser Meldung die Darstellung und/oder die Aufzeichnug der Fernsehsendung veranlaßt.

18. Einrichtung nach Anspruch 17, **dadurch gekennzeichnet**, daß eine Datenreduktionseinrichtung (DR) vorgesehen ist, welche die Datenmenge der in Speicher (6) einzuschreibenden Fernsehbilder reduziert.

19. Einrichtung nach Anspruch 18, **dadurch gekennzeichnet**, daß in dem Speicher (FIFO) die datenreduzierten Fernsehbilder der Datenreduktionseinrichtung (DR) zwischengespeichert werden, um eine geeignete Auswahl des die unerwünschte Videoszene charakterisierenden Anfangsbildes mittels des Orts- oder des Fernbedienungsgebers (FBG) durch Darstellung der zwischengespeicherten Fernsehbilder mit der Anzeigeeinrichtung (A), über eine Datenexpansionseinrichtung (DE), den Bildspeicher (BSP) und einen Digital-Analog-Wandler (5), sowie die Auswahl des die unerwünschte Videoszene charakterisierenden Endbildes durch die Steuereinheit (ST) zu ermöglichen.

20. Einrichtung nach einem oder mehreren der Ansprüche 17 bis 19, **dadurch gekennzeichnet**, daß eine zweite Signalverarbeitungseinrichtung (S2) und bei Bedarf ein zweiter Analog-Digital-Wandler (4) vorgesehen sind, um die Fernsehbilder anderer Sendestationen darstellen zu können, solange die mittels Signalverarbeitungseinrichtung (S1) empfangene Sendestation eine unerwünschte Videoszene sendet und nicht dargestellt wird.

21. Einrichtung nach einem oder mehreren der Ansprüche 17 bis 20, **dadurch gekennzeichnet**, daß der Fern- oder Ortsbedienungsgeber (FBG) eine Taste zur Kennzeichnung der den Anfang der unerwünschten Videoszenen charakterisierenden Fernsehbilder und/oder zur Aktivierung einer Betriebsart aufweist, in welcher die Darstellung unerwünschter Videoszenen verhindert wird.

22. Einrichtung nach einem oder mehreren der Ansprüche 17 bis 19, **dadurch gekennzeichnet**, daß ein Anschluß (7) für ein oder bei einem Videoaufzeichnungsgerät vorgesehen ist, über den ein Pausenschaltimpuls bereitgestellt wird, der die Videoaufzeichnung einer erkannten unerwünschten Videoszene verhindert.

23. Einrichtung zur Durchführung des Verfahrens nach Anspruch 1, **dadurch gekennzeichnet**, daß ein erster Speicher zur Abspeicherung mindestens eines Bildes der unerwünschten Szene, weitere Speicher zur stänigen Zwischenspeicherung mindestens eines Bildes der laufenden Fernsehsendung und dritte Speicher zur Abspeicherung mindestens eines Bildes vor der unerwünschten Videoszene, eine Vergleicherschaltung zum Vergleich der Bilder und Auswertung und/oder Feststellung korrelierter Merkmale, eine Schaltungsanordnung zur Ausgabe eines Erkennungssignals bei Übereinstimmung oder Korrelation, eine weitere Schaltungsanordnung zur Registrierung der Erkennungssignale und eine Auswerteschaltung zur Auswertung der Erkennungssignale vorgesehen sind.

24. Einrichtung nach Anspruch 23 zur Durchführung eines Verfahrens nach Anspruch 2, **dadurch gekennzeichnet**, daß eine Auswahlschaltung zur Festlegung der Anzahl und/oder Lage der Cluster vorgesehen ist, daß aus einem Zwischenspeicher die Cluster der Bilder der unerwünschten Szene ausgelesen und in den ersten Speicher eingepeichert werden, daß eine Vergleichsschaltung vorgesehen ist, die die Übereinstimmung und/oder Korrelation zwischen den Clustern und denen der fortlaufend im Zwischenspeicher zwischengespeicherten definierten Cluster der Bilder durchführt, und daß die Auswerteschaltung ein Erkennungssignal bei Übereinstimmung abgibt.

25. Einrichtung nach Anspruch 23 oder 24, **dadurch gekennzeichnet**, daß das Erkennungssignal zu Beginn und/oder zum Ende der unerwünschten Szene die Ausblendung derselben bzw. die Wiedereinschaltung der fortlaufenden Sendung auslöst und/oder die Aufzeichnung mit einem Viderecorder unterbricht bzw. fortsetzt.

26. Einrichtung nach Anspruch 23 oder 24, **dadurch gekennzeichnet**, daß eine Vergleicherschaltung vorgesehen ist, in der die Übereinstimmung oder Korrelation der Bilder der unerwünschten Videoszene oder der Cluster der Bilder der unerwünschten Videoszene mit fortlaufenden Bildern oder Clustern dieser Bilder verglichen werden, und daß bei Feststellung der Übereinstimmung der Bilder oder Cluster mit solchen der unerwünschten Bildszenen, die während des Empfangs zu einem späteren Zeitpunkt auf dem Kanal empfangen werden, verglichen werden, und daß bei Übereinstimmung oder Korrelation die Kennungssignale als Zeitmeßsignale der Übereinstimmung zur Kontrolle des Empfangs solcher unerwünschter Szenen in einer Zeitmeßschaltung registriert werden.

## Claims

1. Method for the detection of undesired video scenes of a running television transmission, with the following method steps:
a) Storing at least one frame of the undesired video scene, which frame characterised the beginning of the undesired video scene,
b) constant intermediate storing of the frames of the running television transmission,
c) checking of the frames of the running television transmission for agreement or correlation with the frame stored according to method step (a),
d) generating a first recognition signal on ascertaining the agreement and/or on ascertaining correlating features, according to method step (c),
e) storing a frame, which has been stored intermediately according to method step (b) and which lies in time before the occurrence of the undesired video scene, of the running television transmission,
f) checking the frames of the undesired video scene and of the scene following this for agreement or correlation with the frame stored according to method step (e)
g) generating a second signal on ascertaining the agreement and/or on ascertaining correlating features according to method step (f).

2. Method for the detection of undesired video scenes of a running television transmission, with the following method steps:
a) Storing a certain number of defined predetermined groups of pixels (cluster) of a frame of at least one image scene of the undesired video scene, which image scene characterises at least the beginning of the undesired video scene,
b) constant intermediate storing of defined pictorially congruent clusters of the frames cf the running television transmission,
c) checking the clusters of the frames of the running television transmission for agreement or correlation with the clusters stored according to method step (a),
d) generating a first recognition signal on ascertaining the agreement and/or on ascertaining correlating features of the clusters according to method step (c),
e) storing a cluster, which has been stored intermediately according to method step (b) and which lies in time before the occurrence of the undesired video scene, of a frame of the running television transmission,
f) checking the clusters of the selected frames of the undesired video scene and of the scene following this for agreement and/or ascertainment of correlating features with the clusters stored according to method step (e) and
g) generating a second recognition signal on ascertaining the agreement and/or on ascertaining correlating features according to method step (f).

3. Method according to claim 2, characterised thereby, that the clusters of several selected images of the undesired video scene are defined and stored and that these are compared with the clusters, which are ascertained to agree in location,of the continuously intermediately stored images of the running television transmission.

4. Method according to claim 2 or 3, characterised thereby, that the luminance values of the pixels of the predetermined clusters are stored and compared one with the other and a mark function for the generation of the respective recognition signal is formed from the difference values.

5. Method according to one of the preceding claims, characterised thereby, that the first and/or second recognition signals are evaluated for ascertaining the length of the individual undesired video scene and/or for ascertaining the total length of the video scenes transmitted within a certain transmission duration or for checking the contents of a video scene.

6. Method according to one of the claims 1 to 4, characterised thereby, that the first recognition signal is used for the fading-out of the undesired video scene and the second recognition signal is used for the fading-in of the running television transmisssion.

7. Method according to one of the preceding claims, characterised thereby, that a checking for the presence or absence of a transmitter identification is performed additionally for recognition of the beginning and/or end of the undesired video scene.

8. Method according to one of the preceding claims, characterised thereby, that identification signals, which are transmitted from the images of the undesired video scene and characterise the undesired scenes at the beginning and/or at the end, are evaluated for the automatic determination of frames or clusters to be selected and stored or the selection for manual input takes place by observation of the images and input of a storage command by way of a remote control or local control of the device operating according to the method.

9. Method according to claim 1, characterised thereby, that the frames of the undesired video scene and the frames following thereon are checked for correlating components with the stored frame and that the second recognition signal is generated on the ascertainment of correlation.

10. Method according to one of the preceding claims, characterised thereby, that as further or sole test criterion, a special transmitter abbreviation or transmitter pictogram, which is transmitted with the running television transmission, in the frames of the undesired video scene and the frames following thereon is evaluated for presence or absence as criterion of an undesired video scene.

11. Method according to claim 10, characterised thereby, that the confirmation as test criterion takes place through input of a command into the remote control transmitter by the viewer on reception of an undesired video scene when this does not contain any transmitter identification in the form of abbreviations or pictograms.

12. Method according to claim 1 to 8, characterised thereby, that several frames or clusters of the frames before the undesired video scene are stored and the frames of the undesired scene and of the running television transmission following this are checked with the stored ones for agreement, correlation, transmitter abbreviations or transmitter pictograms.

13. Method according to one of the claims 1 to 12, characterised thereby, that the accompanying sound, which is associated with the stored frame or frames or clusters, is also stored and checked for phonetic characteristics and that these phonetic characteristics are compared as additional comparison criterion with the ascertained characteristics of the accompanying sound of the running television transmission and the second recognition signal is generated on agreement of the phonetic characteristics.

14. Method according to one of the claims 1 to 13, characterised thereby, that in the presence of audible signs accompanying the undesired scene at the beginning or at the end, these are detected by means of a recognition circuit and evaluated as additional test criterion.

15. Method according to one of the claims 1 to 14, characterised thereby, that the time duration of the undesired video scene is recorded and during that period or - continuously added - during an encompassing predetermined time portion of, for example 90 minutes compared with a preset target time of the maximum duration of fading-in for the present or the encompassing time portion and that, on the exceeding of the maximum target transmission time of the undesired scenes within the time portion, this is drawn upon as further evaluating criterion for the presence or the end of undesired video scenes.

16. Method according to one of the preceding claims, characterised thereby, that this is restricted to a certain number of selected transmission channels, for example to four channels, of a plurality, in which certain television programs are transmitted.

17. Equipment for the fading-out of undesired video scenes of a running television transmission, which are received and shown or recorded by a television receiver or a video recorder, and consisting of a signal-processing equipment (S1) for the reception and decoding of analog television signals, an analog-to-digital converter (2), which converts the decoded analog television signals into digital form, a frame storage device (BSP), into which the digital television signal is written and from which it is read out, a remote or local control equipment (ST), which controls the equipment by way of a data bus (3), a storage device (6), into which television images, which are selected by an operating person and characterise the beginning of undesired video scenes, or image portions which, defined by location and/or in terms of number, are written, wherein the storage device (6) is so structured that the selected initial image is associated with the respectively set station (S₁ to Sₙ), a comparator (V), which compares the current television images of the set transmitting station with the initial image associated in the storage device (6) with this transmitting station and on agreement sends a report by way of the data bus (3) to the control equipment (ST), whereupon the control equipment (ST) prevents the showing and/or the recording of the recognised undesired video scene, characterised thereby, that a storage device (FIFO) is provided, in which the television frames or frame parts are constantly stored intermediately, that a television frame, which is intermediately in the storage device (FIFO) and lies in time before the beginning of the undesired video scene, is after the recognition of the beginning of the undesired video scene by the control equipment (ST) stored in a storage space (S_{E}) provided in the storage device (6) and that the comparator (V) ascertains the end of the undesired video scene by comparison of the current frames or frame parts of the same with the television frames or frame parts stored in the storage space (S_{E}) and produces a report to the control equipment (ST), which by reason of this report causes the showing and/or recording of the television transmission.

18. Equipment according to claim 17, characterised thereby, that a data reduction equipment (DR) is provided, which reduces the quantity of data of the television frames to be written into the storage device (6).

19. Equipment according to claim 18, characterised thereby, that the data-reduced television frames of the data reduction equipment (DR) are intermediately stored in the store (FIFO) in order to enable a suitable selection of the initial image, which characterises the undesired video scene, by means of the local or remote control transmitter (FBG) through showing of the intermediately stored television images by the display equipment (A), by way of a data expansion equipment (DE), the frame storage device (BSP) and a digital-to-analog converter (5) as well as the selection of the end image characterising the undesired video scene through the control equipment (ST).

20. Equipment according to one or more of the claims 17 to 19, characterised thereby, that a second signal-processing equipment (S2) and, in case of need, a second analog-to-digital converter (4) is provided in order to be able to show the television pictures of other transmitting stations as long as the transmitting station received by means of the signal-processing equipment (S1) sends an undesired video scene and is not shown.

21. Equipment according to one or more of the claims 17 to 20, characterised thereby, that the local or remote control transmitter (FBG) comprises a key for marking the television frames characterising the beginning of the undesired video scenes and/or for activation of a mode of operation, in which the showing of undesired video scenes is prevented.

22. Equipment according to one or more of the claims 17 to 19, characterised thereby, that a connection (7) is provided for or at a video-recording device, by way of which a pause-switching pulse is presented, which prevents the video-recording of a recognised undesired video scene.

23. Equipment for the performance of the method according to claim 1, characterised thereby, that a first storage device for storing at least one frame of the undesired scene, further storage devices for the constant intermediate storing of at least one frame of the running television transmission and third storage devices for storing at least one frame before the undesired video scene, a comparator circuit for comparison of the frames and evaluation and/or ascertainment of correlated features, a circuit arrangement for delivery of a recogntion signal on agreement or correlation, a further circuit arrangement for recording the recognition signals and an evaluating circuit for evaluation of the recognition signals.

24. Equipment according to claim 23 for the performance of a method according to claim 2, characterised thereby, that a selecting circuit is provided for determining the number and/or position of the clusters, that the clusters of the frames of the undesired scene are read out from an intermediate storage device and stored in the first storage device, that a comparison circuit is provided, which performs the agreement and/or correlation between the clusters and those of the defined clusters, which are continually stored intermediately in the intermediate storage device, of the frames and that the evaluating circuit delivers a recognition signal on agreement.

25. Equipment according to claim 23 or 24, characterised thereby, that the recognition signal initiates the fading-out of the undesired scene at the beginning and/or at the end of the same or initiates the renewed switching-on of the running transmission and/or interrupts or continues the recording by a video recorder.

26. Equipment according to claim 23 or 24, characterised thereby, that a comparator circuit is provided, in which the agreement or correlation of the frames of the undesired video scene or of the clusters of the frames of the undesired video scene are compared with running frames or clusters of those frames and that, on ascertainment of the agreement of the frames or clusters, are compared with such of the undesired picture scenes as are received on the channel during the reception at a later time and that, on agreement or correlation the identification signals are recorded in a time-measuring circuit as time-measuring signals of the agreement for the checking of the reception of such undesired scenes.

## Revendications

1. Procédé pour la détection de scènes vidéo indésirables à partir d'une émission télévisée en cours, avec les étapes opératoires suivantes :
a) mise en mémoire d'au moins une image de la scène vidéo indésirable qui caractérise le début de la scène vidéo indésirable,
b) mise constante en mémoire tampon des images de l'émission télévisée en cours,
c) contrôle des images de l'émission télévisée en cours du point de vue de la correspondance ou de la corrélation avec l'image mise en mémoire selon l'étape opératoire a),
d) génération d'un premier signal d'identification lors de la constatation de la correspondance et/ou lors de la constatation de caractéristiques de corrélation selon l'étape opératoire c),
e) mise en mémoire d'une image mémorisée en mémoire tampon selon l'étape opératoire b) de l'émission télévisée en cours qui se situe dans le temps avant l'apparition de la scène vidéo indésirable,
f) contrôle des images de la scène vidéo indésirable et de la scène suivant celle-ci pour la correspondance ou la corrélation avec l'image mise en mémoire selon l'étape opératoire e),
g) génération d'un deuxième signal d'identification lors de la constatation de la correspondance et/ou de la constatation de caractéristiques de corrélation selon l'étape opératoire f).

2. Procédé pour la détection de scènes vidéo indésirables à partir d'une émission télévisée en cours avec les étapes opératoires suivantes :
a) mise en mémoire d'un nombre déterminé de groupes prédéterminés définis de pixels (cluster) à partir d'une image d'au moins une scène d'image de la scène vidéo indésirable qui caractérise au moins le début de la scène vidéo indésirable,
b) mise constante en mémoire tampon de clusters congruents définis des images de l'émission télévisée en cours,
c) contrôle des clusters des images de l'émission télévisée en cours pour la correspondance ou la corrélation avec les clusters mis en mémoire selon l'étape opératoire a),
d) génération d'un premier signal d'identification lors de la constatation de la correspondance et/ou de la constatation de caractéristiques de corrélation des clusters selon l'étape opératoire c),
e) mise en mémoire des clusters mis en mémoire tampon selon l'étape opératoire b) d'une image de l'émission télévisée en cours, laquelle se situe dans le temps avant l'apparition de la scène vidéo indésirable,
f) contrôle des clusters des images sélectionnées de la scène vidéo indésirable et de la scène suivant celle-ci pour la correspondance et/ou la constatation de caractéristiques de corrélation avec les clusters mis en mémoire selon l'étape opératoire e),
g) génération d'un deuxième signal d'identification lors de la constatation de la correspondance et/ou de la constatation de caractéristiques de corrélation selon l'étape opératoire f).

3. Procédé selon la revendication 2, caractérisé en ce que les clusters de plusieurs images sélectionnées de la scène vidéo indésirable sont définis et mis en mémoire et en ce que ceux-ci sont comparés avec les clusters fixés correspondants localement des images mises en mémoire tampon de façon continue de l'émission télévisée en cours.

4. Procédé selon la revendication 2 ou 3, caractérisé en ce que les valeurs de luminance des pixels des clusters prédéterminés sont mises en mémoire et comparées entre elles et à partir des valeurs de différence, on forme une fonction signe pour la génération du signal d'identification respectif.

5. Procédé selon l'une des revendications précédentes, caractérisé en ce que les premier et/ou second signaux d'identification sont évalués pour la détermination de la longueur de chaque scène vidéo indésirable et/ou pour la détermination de la longueur totale des scènes vidéo émises au cours d'une durée d'émission déterminée ou pour le contrôle du contenu d'une scène vidéo.

6. Procédé selon l'une des revendications 1 à 4, caractérisé en ce que le premier signal d'identification est utilisé pour la fermeture en fondu de la scène indésirable et en ce que le deuxième signal d'identification est utilisé pour l'ouverture en fondu de l'émission télévisée en cours.

7. Procédé selon l'une des revendications précédentes, caractérisé en ce que pour l'identification du début et/ou de la fin de la scène vidéo indésirable, on effectue en plus un contrôle sur la présence ou l'absence d'un repère d'émetteur.

8. Procédé selon l'une des revendications précédentes, caractérisé en ce que pour la détermination automatique des images ou clusters à sélectionner pour la mise en mémoire à partir des images de la scène vidéo indésirable, on évalue les signaux distinctifs qui caractérisent le début et/ou la fin des scènes indésirables ou pour l'entrée manuelle s'effectue la sélection par observation des images et entrée d'une commande de mémorisation par une commande à distance ou commande locale de l'appareil fonctionnant selon le procédé.

9. Procédé selon la revendication 1, caractérisé en ce que les images de la scène indésirable et des images suivantes sont contrôlées pour déterminer les composants de corrélation avec l'image mémorisée et en ce que lors de la constatation de corrélation, on génère le second signal d'identification.

10. Procédé selon l'une des revendications précédentes, caractérisé en ce qu'en tant que critère de contrôle ultérieur ou unique, on évalue un pictogramme d'émetteur ou signe abrégé d'émetteur particulier transmis avec l'émission télévisée en cours sur les images de la scène vidéo indésirable et des images consécutives pour déterminer la présence ou l'absence en tant que critère d'une scène vidéo indésirable.

11. Procédé selon la revendication 10, caractérisé en ce que la confirmation en tant que critère de contrôle s'effectue par entrée d'une commande sur la commande à distance par le spectateur lors de la réception d'une scène vidéo indésirable lorsque celle-ci ne présente aucune identification d'émetteur sous forme de désignation abrégée ou de pictogramme.

12. Procédé selon les revendications 1 à 8, caractérisé en ce que plusieurs images ou clusters d'image de la scène vidéo indésirable sont mis en mémoire et les images de la scène indésirable et de l'émission télévisée suivante en cours sont contrôlées avec les pictogrammes d'émetteur ou désignation abrégée d'émetteur mémorisés pour déterminer une correspondance, corrélation.

13. Procédé selon l'une des revendication 1 à 12, caractérisé en ce que le son d'accompagnement affecté à l'image mise en mémoire ou aux images ou clusters mis en mémoire est également mémorisé et contrôlé en fonction de caractéristiques phonétiques et en ce que ces caractéristiques phonétiques sont comparées en tant que critère de comparaison supplémentaire avec les caractéristiques déterminées du son d'accompagnement de l'émission télévisée en cours et en cas de correspondance des caractéristiques phonétiques, on génère le second signal d'identification.

14. Procédé selon l'une des revendications 1 à 13, caractérisé en ce qu'en cas de présence du son d'accompagnement au début ou à la fin de la scène indésirable, celui-ci est détecté au moyen d'un circuit d'identification et il est évalué en tant que critère de contrôle supplémentaire.

15. Procédé selon l'une des revendications 1 à 14, caractérisé en ce que l'on enregistre la durée des scènes vidéo indésirables et l'on compare celle-ci pendant ce temps ou - on les ajoute de façon continue - pendant une période de temps prédéterminée globale, par exemple 90 minutes, avec un temps alloué nominal de la durée d'ouverture en fondu maximum pour la période de temps globale et en ce que lors d'un dépassement du temps d'émission nominal maximum des scènes indésirables à l'intérieur d'une période de temps, ceci sera pris en compte comme critère d'évaluation supplémentaire pour la présence ou la fin des scènes vidéo indésirables.

16. Procédé selon l'une des revendications précédentes, caractérisé en ce que celui-ci est limité à un nombre déterminé de canaux de transmission sélectionnés parmi une pluralité dans lesquels sont transmises des émissions télévisées déterminées, par exemple à quatre canaux.

17. Dispositif pour la fermeture en fondu de scènes vidéo indésirables à partir d'une émission télévisée continue qui est reçue ou reproduite ou enregistrée au moyen d'un téléviseur ou d'un magnétoscope, constitué par un dispositif de traitement des signaux (S1) pour la réception et le décodage de signaux télévisés analogiques, un convertisseur analogique-numérique (2) qui transforme les signaux télévisés analogiques décodés sous la forme numérique, une mémoire d'image (BSP) dans laquelle le signal télévisé numérique est enregistré et sélectionné, un dispositif de commande à distance ou local (SP) qui commande le dispositif par l'intermédiaire d'un omnibus de données (3), une mémoire (6) dans laquelle sont enregistrées des parties d'image choisies par un opérateur, parties d'image définies dans le nombre et/ou localement ou image télévisée caractérisant le début de scènes vidéo indésirables, la mémoire (6) étant structurée de telle sorte que l'image initiale choisie (S1, .... Sn) est affectée au numéro de station respectivement choisie, un comparateur (V), qui compare les images télévisées en cours de la station d'émission choisie avec l'image initiale affectée à cette station d'émission dans la mémoire (6) et en cas de correspondance, envoie une annonce par l'intermédiaire de l'omnibus de données (3) au dispositif de commande (ST), après quoi le dispositif de commande (ST) empêche la représentation et/ou l'enregistrement de la scène vidéo reconnue indésirable,
caractérisé en ce que
il est prévu une mémoire (FIFO) dans laquelle les images télévisées ou parties d'image sont constamment mises en mémoire tampon, en ce que selon l'identification du début d'une scène vidéo indésirable par le dispositif de commande (ST) est mise en mémoire dans la mémoire (FIFO) l'image télévisée mise en mémoire tampon qui se situe temporellement avant le début de la scène vidéo indésirable, dans une place mémoire (SE) prévue dans la mémoire (6) et en ce que le comparateur (V) détermine la fin de la scène vidéo indésirable par comparaison des images ou des parties d'image en cours de celle-ci avec les parties d'image ou l'image télévisée mise en mémoire dans l'emplacement mémoire (SE) et produit une annonce à destination du dispositif de commande (ST) qui suite à cette annonce, provoque la reproduction et/ou l'enregistrement de l'émission télévisée.

18. Dispositif selon la revendication 17, caractérisé en ce qu'il est prévu un dispositif de réduction de données (DR) qui réduit la quantité de données des images télévisées à inscrire dans la mémoire (6).

19. Dispositif selon la revendication 18, caractérisé en ce que dans la mémoire (FIFO) sont mises en mémoire tampon les images télévisées réduites en données du dispositif de réduction de données (DR) pour permettre une sélection appropriée de l'image de début caractérisant la scène vidéo indésirable au moyen de la commande locale ou à distance (FBG) par représentation des images télévisées mises en mémoire tampon avec le dispositif d'affichage (A) par l'intermédiaire d'un dispositif d'expansion de données (DE), par la mémoire d'image (BSP) et un convertisseur numérique-analogique (5), et permet également la sélection de l'image de fin caractérisant la scène vidéo indésirable par l'unité de commande (ST).

20. Dispositif selon une ou plusieurs des revendications 17 à 19, caractérisé en ce qu'il est prévu un second dispositif de traitement de signaux (S2) et éventuellement un second convertisseur analogique-numérique (4) pour permettre la représentation des images télévisées d'autres stations émettrices dans la mesure où la station émettrice reçue au moyen du dispositif de traitement de signaux (S1) émet une scène vidéo indésirable et n'est pas représentée.

21. Dispositif selon une ou plusieurs des revendications 17 à 20, caractérisé en ce que la commande à distance ou commande locale (FBG) comporte une touche pour la caractérisation des images télévisées caractérisant le début des scènes vidéo indésirables et/ou pour l'activation d'un mode de fonctionnement dans lequel on empêche la représentation de scènes vidéo non souhaitées.

22. Dispositif selon une ou plusieurs des revendications 17 à 19, caractérisé en ce qu'il est prévu une connexion (7) pour un ou avec un appareil d'enregistrement vidéo, par lequel est émise une impulsion de circuit d'arrêt qui empêche l'enregistrement vidéo d'une scène vidéo reconnue indésirable.

23. Dispositif pour la réalisation du procédé selon la revendication 1, caractérisé en ce que sont prévus une première mémoire pour la mise en mémoire d'au moins une image de la scène indésirable, d'autres mémoires pour la mise constante en mémoire tampon d'au moins une image de l'émission télévisée en cours et une troisième mémoire pour la mise en mémoire d'au moins une image avant la scène vidéo indésirable, un circuit comparateur pour comparer les images et évaluer et/ou déterminer les caractéristiques de corrélation, un dispositif de commutation pour l'émission d'un signal d'indication en cas de correspondance ou de corrélation, un autre dispositif de commutation pour l'enregistrement des signaux d'identification et un circuit d'évaluation pour évaluer le signal d'identification.

24. Dispositif selon la revendication 23 pour la réalisation d'un procédé selon la revendication 2, caractérisé en ce qu'il est prévu un circuit de sélection pour déterminer le nombre et/ou la position des clusters, en ce qu'à partir d'une mémoire tampon, sont sélectionnés les clusters des images des scènes indésirables et sont mémorisés dans la première mémoire, en ce qu'il est prévu un circuit comparateur qui effectue la correspondance et/ou la corrélation entre les clusters et entre ceux des clusters des images définies, mis constamment en mémoire tampon et en ce que le circuit d'évaluation émet un signal d'identification en cas de correspondance.

25. Dispositif selon la revendication 23 ou 24, caractérisé en ce que le signal d'identification déclenche au début et/ou à la fin de la scène indésirable l'ouverture en fondu ou le réenclenchement de l'émission en cours et/ou interrompt ou poursuit l'enregistrement avec un magnétoscope.

26. Dispositif selon la revendication 23 ou 24, caractérisé en ce qu'il est prévu un circuit comparateur dans lequel on compare la correspondance ou la corrélation des images de la scène vidéo indésirable ou des clusters des images de la scène vidéo indésirable avec les images ou clusters continus de ces images et en ce qu'en cas de constatation de correspondance des images ou des clusters avec les images ou clusters de scène indésirable, qui pendant la réception à un moment ultérieur sont reçus sur le canal, et en ce qu'en cas de correspondance ou de corrélation, les signaux d'identification sont enregistrés en tant que signaux d'horloge de la correspondance pour le contrôle de la réception de ces scènes indésirables dans un circuit d'horloge.
